# EUROPÄISCHE PATENTANMELDUNG

(11) **EP 0 858 145 A2**
(43) Veröffentlichungstag der Anmeldung: **12.08.1998**
(21) Anmeldenummer: 98101901.1
(22) Anmeldetag: 04.02.1998
(51) Int. Cl.: H02K 9/00, H02K 11/04

(54) **Wärmerückgewinnungsverfahren sowie dessen Verwendung**

(30) Priorität: 06.02.1997 DE 19704408
(71) Anmelder: BAUMÜLLER ANLAGEN-SYSTEMTECHNIK GmbH Co., 90482 Nürnberg (DE)
(72) Erfinder: Scholz, Norbert, 91161 Hiltpoltstein (DE); Scheuerlein, Karl, 91161 Hiltpoltstein (DE)
(74) Vertreter: Götz, Georg, Dipl.-Ing.

(57) **Zusammenfassung**

Verfahren zur Rückgewinnung von Wärme aus technischen, automatisierten Prozessen, die eine oder mehrere Wärmequellen für Abwärme aufweisen, die über einen oder mehrere Wärmeübertrager, beispielsweise Wärmetauscher oder Wärmebrücken, einem oder mehreren Wärmeverbrauchern eines oder mehrerer technischer Nachbarprozesse zugeführt wird, wobei zumindest der oder die erstgenannten Prozesse mit einem gekühlten, elektrischen Antriebssystem und zusammen mit dem Nachbarprozeß in einem gemeinsamen, stationären Gebäude betrieben werden, wobei als Wärmequelle das Verlustleistung erzeugende elektrische Antriebssystem verwendet wird, und dessen Kühlmittel oder -medium oder ein sonstiger Wärmeträger unmittelbar nach seinem Einsatz im elektrischen Antriebssystem dem oder den Wärmeübertragern und/oder -brücken zugeführt wird, die mit dem oder den Wärmeverbrauchern des Nachbarprozesses gekoppelt und/oder integriert sind.

## Beschreibung

Die Erfindung betrifft ein Verfahren zur Rückgewinnung von Wärme aus technischen, automatisierten Prozessen, die eine oder mehrere Wärmequellen für Abwärme aufweisen, die über einen oder mehrere Wärmeträger, beispielsweise Wärmetauscher oder Wärmebrücken, einem oder mehreren Wärmeverbrauchern eines oder mehrerer Nachbarprozesse zugeführt wird, wobei zumindest der oder die erstgenannten Prozesse mit einem gekühlten elektrischen Antriebssystem und zusammen mit dem Nachbarprozess in einem gemeinsamen stationären Gebäude betrieben werden. Ferner betrifft die Erfindung die Verwendung des Wärmerückgewinnungsverfahrens in einem Produktions- bzw. Herstellungsprozeß.

Wie an sich allgemein bekannt, werden bei Verfahren zur Wärmerückgewinnung Maßnahmen getroffen, um die Wärmeenergie bzw. Enthalpie der ein Gebäude oder eine technische Anlage verlassenden Abgase, Abluft, Ab- bzw. Kühlwasser auszunutzen. Dazu werden Wärmeübertrager wie Wärmetauscher, Wärmepumpen, Rekuperatoren oder dergleichen eingesetzt. Die Ausnutzung kann entweder im technischen Prozeß selbst erfolgen (zum Beispiel Speisewasservorwärmung durch das Abgas) oder für einen fremden Prozeß (zum Beispiel Bereitstellung von Prozeßwärme für einen Nachbarprozeß) oder aber durch Bereitstellung allgemein nutzbarer Energie (vor allem elektrische Energie durch zusätzliche Stromerzeugung in einem Abwärmekraftwerk).

Obwohl die Wärmerückgewinnung aus energetischen Gründen wie ökologischen Gesichtspunkten wünschenswert ist, waren bisher dem praktischen Anwendungsumfang aus technischen und meist wirtschaftlichen Gründen Grenzen gesetzt. Die technischen Gründe werden nach vorherrschender Meinung in dem stoßweisen Arbeitsbetrieb einer Anlagenkomponente, in der Nicht-Gleichzeitigkeit von Abwärmeangebot und Wärmenachfrage oder im zu niedrigen Temperaturniveau der Abwärme gesehen. Vielfach können die Investitions- und Betriebskosten der für die Wärmerückgewinnung zusätzlich notwendigen Anlageteile höher sein als die Ersparnisse durch die niedrigeren Energiekosten.

Mithin stellt sich die der Erfindung zugrundeliegende Aufgabe, unter Beachtung von Gesichtspunkten der Wirtschaftlichkeit Wärmerückgewinnungsverfahren so weiterzuentwickeln, daß deren technischer Anwendungsbereich möglichst unter gleichzeitiger Verminderung notwendiger Anlagen- oder Maschinenkomponenten erweitert wird.

Zur Lösung wird bei einem Wärmerückgewinnungsverfahren der eingangs genannten Art erfindungsgemäß vorgeschlagen, daß als Wärmequelle das Verlustleistung erzeugende elektrische Antriebssystem verwendet wird, und dessen Kühlmittel oder -medium oder sonstiger Warmeträger zur Abführung von Wärme unmittelbar nach seinem Einsatz im elektrischen Antriebssystem dem oder den Wärmeübertragern und/oder -brücken zugeführt wird, die mit dem oder den Wärmeverbrauchern des Nachbarprozesses gekoppelt und/oder integriert sind. Nach diesem Konzept wird die Verlustleistung, die bei einem elektrischen Antriebssystern unvermeidlich anfällt, nicht wie bisher (vgl. zum Beispiel DE 44 11 055 A1) über externe Wärmetauscher gepumpt an die Umgebungsluft abgegeben; vielmehr wird diese Verlustleistung aus den elektrischen Antrieben rückgewonnen und für weitere, technische Nachbarprozesse ausgenutzt. Um die Abwärme aus den elektrischen Antrieben an den benachbarten Nutzprozeß abgeben zu können, werden Wärmeübertragungssysteme eingesetzt, die hier im weitesten Sinne zu verstehen sind: nicht nur Apparate, die von zwei oder mehr Fluiden durchströmt werden, sondern auch Wärmetransport oder Wärmeleitung in festen Stoffen bzw. Körpern, wie zum Beispiel gerippten Kühlkörpern. Die Nachbarprozesse können ebenfalls durch elektrische Antriebssysteme betrieben sein, was aber im Rahmen der Erfindung nicht zwingend notwendig ist.

Mit der Erfindung ist der Weg eröffnet, eine teure Entsorgung der Verlustleistung im elektrischen Antriebssystem über mit hohen Investitionskosten verbundenen Klima-Lüftungsanlagen zu vermeiden, und statt dessen die elektrische Verlustleistung positiv in die Energiebilanz einzubringen. Dies kann insbesondere dadurch erfolgen, daß die Verlustleistung zur Speisung einer Klimaanlage verwendet wird, die im stationären Gebäude installiert ist, in dem auch die Verlust- bzw. Abwärme abgebenden technischen Prozesse ablaufen. Die Raum-Klimatisierung innerhalb des Gebäudes würde dann den einen oder die mehreren technischen Nachbarprozesse bilden, welche die Abwärme aus den elektrischen Antriebssystemen im Sinne der Erzielung einer positiven Energiebilanz verbrauchen können. Bei entsprechender Abstimmung des elektrischen Antriebskonzeptes mit der technischen Anlage des Nachbarprozesses lassen sich sogar Investitionskosten für technische Komponenten und Ausrüstungen einsparen: Insbesondere läßt sich eine Klimatisierungsanlage aus den elektrischen Antrieben heraus speisen, und die bisher notwendige, externe Energie-Fremdversorgung, die hohe Investitionen und viele technische Komponenten erfordert, kann entfallen. Also besteht eine besondere Ausführung des erfindungsgemäßen Verfahrens darin, daß als Wärmeverbraucher eine auf den Innenraum des Gebäudes einwirkende Klimatisierungsanlage, beispielsweise mit Druckwasserbefeuchter (vgl. 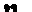 LUMI Druckwasserbefeuchter", Prospekt Firma Michelbach Regeltechnik GmbH, Lupinenstr. 7, 90513 Zirndorf) verwendet wird. Mit einer Gebäude-Klimatisierungsanlage, die erfindungsgemäß von der Verlustleistung des elektrischen Antriebssystems gespeist wird, lassen sich beispielsweise im Gebäude einer Druckerei Parameter, Einrichtungen und Gesichtspunkte wie Temperatur, Luftfeuchtigkeit, Wasserdampfdruck, Wasserhaushalt, Wärmerückgewinnung, Kälterückgewinnung, Frischluft, Umluft, Mikrobiologie, Hygiene, Verlustleistung, Walkleistung, Luftbefeuchtung, Papierbefeuchtung, Luftklappensteuerung, Differenzdruckausgleich, Kaltwasser, Warmwasser, Maschinentemperatur, Farbtemperatur, Trockner, Nachverbrennung, Kühlwalzen, Heizung, Kältemaschine, Kälteturm, Blockheizkraftwerk erzeugen, beeinflussen und/oder beherrschen.

Wie an sich bekannt, werden in einem elektrischen Antriebssystem nicht nur Rotor oder vor allem Stator des Elektromotors (vgl. DE 44 11 055 A1) vorzugsweise mittels Fluid, sondern auch die Leistungselektronikteile wie Umrichter bzw. Servoelektronik vorzugsweise mittels Luft und/oder Festkörper wie Kühlrippen gekühlt. In dieser Hinsicht besteht eine Ausbildung der Erfindung darin, daß dem oder den Wärmeübertragern wenigstens das Kühlmittel vom oder von den Leistungselektronikteilen zugeführt wird oder deren Kühleinrichtungen damit verbunden sind. Als Kühleinrichtungen für das Leistungselektronikteil eignen sich, wie an sich bekannt, metallische Festkörper in Form von Kühlrippen, die dann im Sinne der Erfindung mit Wärmetransportmedien und/oder -übertragern zu koppeln sind. Dies kann insbesondere durch Verwendung eines Lüfters realisiert sein, welcher die Luft als Fluid in Strömung versetzt.

Das erfindungsgemäße Verfahren läßt sich nicht nur in Druckerei-Produktionsprozessen, bei denen die Druckwalzen von elektrischen Antriebe hoher Leistung bewegt werden, sondern auch bei der Herstellung von Textilerzeugnissen einsetzen. In beiden Produktionsprozessen sind bestimmte Raumluftzustände, definiert durch Parameter wie Temperatur oder relative Luftfeuchte, möglichst exakt einzuhalten. Diese Anforderungen können unter erfindungsgemäßer Verwendung der Verlustwärme aus den elektrischen Antrieben besonders ökonomisch aufgrund Vermeidung externer Energieversorgungskomponenten und besonders ökologisch aufgrund mehrfacher Energieausnutzung und Energieeinsparung erfüllt werden.

Weitere Einzelheiten, Merkmale, Vorteile und Wirkungen auf der Basis der Erfindung ergeben sich aus der nachfolgenden Beschreibung bevorzugter Ausführungswege der Erfindung sowie den Zeichnungen. Diese zeigen jeweils schematisch in
- Fig. 1: einen Ablaufplan für das erfindungsgemäße Wärmerückgewinnungssystem,
- Fig. 2: eine Konkretisierung des in Fig. 1 angedeuteten Grobkonzeptes.

In einem geschlossenen, ortsfesten Gebäude, zum Beispiel Druckereigebäude, laufen eine Vielzahl von Produktionsprozessen Pr₁, Pr₂, ..., Pr_{N} ab. Die notwendige Bewegung wie Drehen, Linearbewegung oder Verschwenken von Maschinenkomponenten und -teilen wird von einem elektrischen Antriebssystem EDS bewerkstelligt. Dieses kann mit Rotations- und/oder Linearmotoren bestückt sein. Die Wirkleistung P_{E} des Antriebssystems EDS kommt den technischen Prozessen Pr₁, Pr₂, ..., Pr_{N} zugute. Die im elektrischen Antriebssystem unvermeidlich entstehende Verlustleistung P_{L} wird über Wärmetransportmittel 2, beispielsweise eine Leitung mit strömendern Fluid und/oder Wärmeleiter bzw. Wärmebrücken, mit der Temperatur t₁ auf ein Wärmübertragungs- bzw. Austauschsystem 3 geleitet. Im Falle von strömenden Fluid als bzw. im Wärmetransportmittel besitzt das Wärmeübertragungssystem 3 einen Ausgang, aus dem das Fluid mit der erniedrigten Temperatur t₂ herausgelangen und - nach einer speziellen Ausbildung der Erfindung - dem elektrischen Antriebssystem wieder zurückgeführt werden kann. Die Bildung eines geschlossenen Kreislaufs ist aber für das Erfindungsprinzip nicht zwingend. In dem Wärmeübertragungssystem 3 wird dem dorthin zunächst mit der Temperatur t₁ gelangenden Wärmetransportmittel 2 Wärme entzogen und einem oder mehreren technischen Nachbarprozessen NPr₁, NPr₂, ..., NPr_{N} zugeführt. Dies kann zweckmäßig mit strömendem Fluid im Rahmen eines geschlossenen Sekundär-Kreislaufs (wie zeichnerisch mit dem in die Nachbarprozesse eingehenden und daraus austretenden Wärmetransportmitteln 4 angedeutet) erfolgen. Zweckmäßig werden als technische Nachbarprozesse Klimatisierungsprozesse für den Innenraum des Gebäudes 1 verwendet, das stationär im Boden 5 verankert ist. Hierbei kann es sich beispielsweise um die Produktionsstätte einer Druckerei oder eines Textilerzeugnisherstellers handeln.

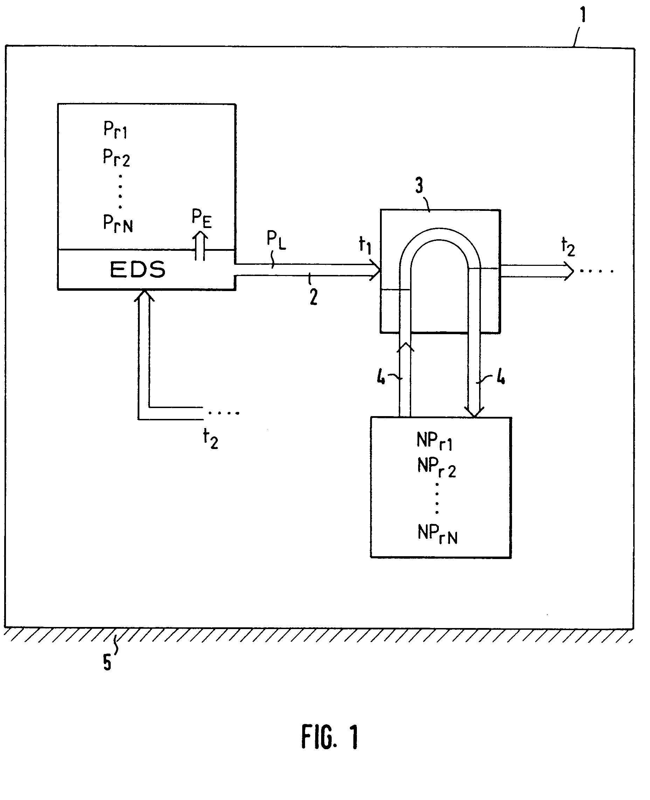

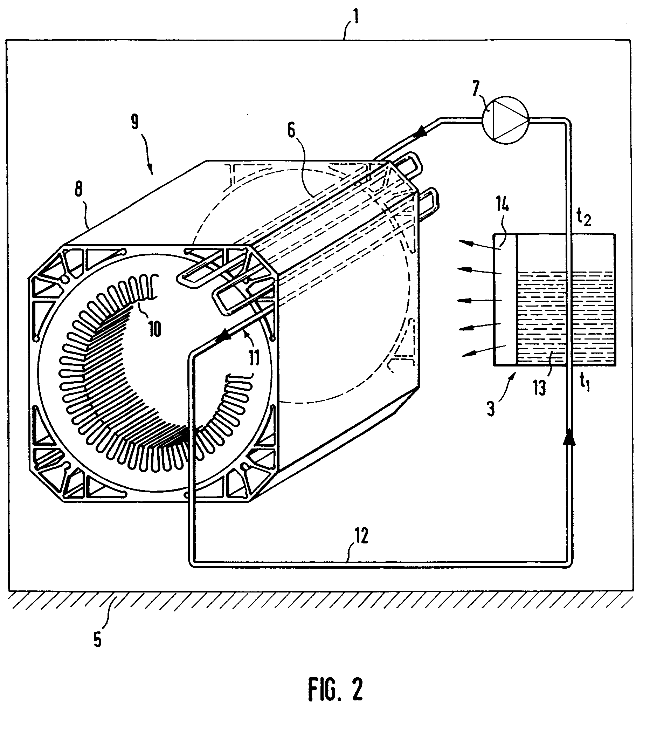

Gemäß Fig. 2 wird im Rahmen eines geschlossenen Kühlmittelkreislaufes Kühlfluid 6, beispielsweise Kühlwasser, mittels einer Pumpe 7 in den Stator 8 eines Elektromotors 9 mit Rotor 10 hineingepumpt. Vom Kühlmittelauslaß 11 aus gelangt das Kühlfluid 6 in eine Fluidleitung 12, welche einen Wärmetauscher 3 durchsetzt, der im konkreten Ausführungsbeispiel als Druckwasser-Luftbefeuchter mit Wasserreservoir 13 und Dampfauslaßdüsen 14 ausgeführt ist. Das Kühlfluid tritt mittels der Fluidleitung 12 in den Bereich des Wärmetauschers 3 mit der Temperatur t₁ ein und daraus mit der niedrigeren Temperatur t₂ wieder aus, bevor es über die Pumpe 7 erneut in den Stator 8 befördert wird. Im übrigen gelten die Ausführungen zu Fig. 1 für das Ausführungsbeispiel nach Fig. 2 entsprechend.

Die Erfindung ist nicht auf das in Fig. 2 gezeigte Ausführungsbeispiel beschränkt. So kann alternativ oder zusätzlich auch dem Umrichter oder sonstigen Leistungselektronikteil des elektrischen Antriebssystems EDS zweckmäßig mittels gasförmigen Kühlfluids und/oder Kühlkörpern Verlustwärme entzogen und einem Wärmetauscher 3 zugeführt werden. Ferner kann anstelle des Rotationsmotors 9 nach Fig. 2 ein elektrischer Linearantrieb Verwendung finden.

Mit dem Erfindungsprinzip läßt sich eine erhebliche Energieeinsparung erzielen: Beispielsweise bei einem Zeitungsrotations-Druckereiprozess mit 32 Druckwerken, 2 Falzaggregaten und 12 Überbauten beträgt die einzuspeisende, elektrische Energie bei 100% Einsatzdauer etwa 1,2 MW. Der Anteil der Verlustleistung beträgt dabei nach praktischen Erfahrungen 236 KW. Bei einem Kilowatt Stundenpreis von DM 0,15 ergeben sich so Energie- bzw. Stromkosten in Höhe von DM 188,-- pro Stunde, das sind bei 3000 Betriebsstunden pro Jahr DM 564.000,--. Entsprechend ergibt sich ein geldwerter Vertustanteil in Höhe von DM 34,89 pro Stunde, das sind bei 3000 Betriebsstunden pro Jahr DM 104.670,--. Dieser Betrag läßt sich bei Anwendung des Erfindungsprinzips zumindest zum größten Teil einsparen. Außerdem reduziert sich der für einen Nachbarprozeß, beispielsweise eine Klimalüftung, notwendige Hardware-Aufwand.

## Patentansprüche

1. Verfahren zur Rückgewinnung von Wärme aus technischen, automatisierten Prozessen (Pr₁,Pr₂, ..., Pr_{N}), die eine oder mehrere Wärmequellen für Abwärme (P_{L}) aufweisen, die über einen oder mehrere Wärmeübertrager (3), beispielsweise Wärmetauscher oder Wärmebrücken, einem oder mehreren Wärmeverbrauchern eines oder mehrerer technischer Nachbarprozesse (NPr₁,NPr₂,...,NPr_{N}) zugeführt wird, wobei zumindest der oder die erstgenannten Prozesse (Pr₁,Pr₂, ...,Pr_{N}) mit einem gekühlten, elektrischen Antriebssystem (EDS) und zusammen mit dem Nachbarprozeß (NPr₁,NPr₂,...,NPr_{N}) in einem gemeinsamen, stationären Gebäude (1) betrieben werden, **dadurch gekennzeichnet, daß** als Wärmequelle das Verlustleistung (P_{L}) erzeugende elektrische Antriebssystem (EDS) verwendet wird, und dessen Kühlmittel oder -medium (6) oder ein sonstiger Wärmeträger unmittelbar nach seinem Einsatz im elektrischen Antriebssystem (EDS) dem oder den Wärmeübertragern (3) und/oder -brücken zugeführt wird, die mit dem oder den Wärmeverbrauchern des Nachbarprozesses (NPr₁,NPr₂,...,NPr_{N}) gekoppelt und/oder integriert sind.

2. Verfahren nach Anspruch 1, dadurch gekennzeichnet, daß das elektrische Antriebssystem (EDS) von einem geschlossenen Kühlmittelkreislauf durchsetzt und/oder beaufschlagt ist (Fig.2).

3. Verfahren nach Anspruch 1 oder 2, wobei das elektrische Antriebssystem (EDS) einen oder mehrere Elektromotoren (9) mit gekühltem Stator (8) und Rotor (10) aufweist, dadurch gekennzeichnet, daß wenigstens das Kühlmittel (6) vom Stator (8) dem oder den Wärmeübertragern (3) zugeführt wird.

4. Verfahren nach einem der vorangehenden Ansprüche, wobei das elektrische Antriebssystem (EDS) ein oder mehrere gekühlte Umrichter oder sonstige Leistungselektronikteile zur Ansteuerung von Elektromotoren (9) aufweist, dadurch gekennzeichnet, daß wenigstens das Kühlmittel (6) oder die Kühleinrichtung vom oder von den Leistungselektronikteilen dem oder den Wärmeübertragern (3) zugeführt wird beziehungsweise damit verbunden ist.

5. Verfahren nach einem der vorangehenden Ansprüche, dadurch gekennzeichnet, daß als Wärmeverbraucher beziehungsweise technischer Nachbarprozeß (NPr₁,NPr₂,...,NPr_{N}) eine auf den Innenraum des Gebäudes (1) einwirkende Klimatisierungsanlage insbesondere mit Druckwasserbefeuchter (13,14) verwendet wird.

6. Verfahren nach einem der vorangehenden Ansprüche, dadurch gekennzeichnet, daß als Kühlmittel (6) für das elektrische Antriebssystem (EDS), insbesondere für den Elektromotor (9), Fluid, insbesondere Wasser, verwendet wird.

7. Verfahren nach einem der vorangehenden Ansprüche, dadurch gekennzeichnet, daß als Kühleinrichtung für das elektrische Antriebssystem, insbesondere für das Leistungselektronikteil, Wärmeleiter beziehungsweise -brücken, insbesondere metallische Festkörper wie Kühlrippen, verwendet werden, die mit dem oder den Wärmeübertragern (3) gekoppelt sind.

8. Verfahren nach Anspruch 7, dadurch gekennzeichnet, daß als Kopplungsmittel in Strömung versetztes Fluid, insbesondere von einem Lüfter bewegte Luft, verwendet wird.

9. Verwendung des Verfahrens nach einem der vorangehenden Ansprüche im Rahmen eines Produktionsprozesses insbesondere für Druckerei- oder Textilerzeugnisse, wobei Maschinenkomponenten vom gekühlten elektrischen Antriebssystem (EDS) bewegt werden.
